# EUROPEAN PATENT SPECIFICATION

(11) **EP 0 852 109 B1**
(45) Date of publication and mention of the grant of the patent: **03.04.2002**
(21) Application number: 97203797.2
(22) Date of filing: 03.12.1997
(51) Int. Cl.: A01D 45/02

(54) **Modular stalkroll with one bolt attachment**
Modulare Pflückwalze mit einziger Schraubbolzen-Verbindung
Rouleau cueilleur modulaire à boulon de connexion unique

(30) Priority: 06.12.1996 US 761274
(43) Date of publication of application: 08.07.1998
(73) Proprietor: NEW HOLLAND BELGIUM N.V., B-8210 Zedelgem (BE)
(72) Inventor: Bich, Gary L., New Holland, PA 17557 (US); Rayfield, James F., New Holland, PA 17557 (US); Hurlburt, Dale M., Landisville, PA 17538 (US)
(74) Representative: Vandenbroucke, Alberic

(56) References cited:
- DE-B- 1 242 035
- US-A- 2 678 526
- US-A- 2 905 181
- US-A- 5 040 361
- US-A- 5 404 699

## Description

This invention relates to the improvement of machines used in the harvesting of corn. More particularly, it relates to a stalkroll on a corn header.

Mechanical harvesting of corn has taken place for decades. However, efforts continue to make corn harvest operations more efficient and effective. A corn harvester generally includes a corn header which removes the ears from the stalks. The ear of corn is then fed into a separator or thresher which separates the grains of corn from all other materials. A corn header actually comprises several row unit assemblies, one for each row which is being harvested in a single pass over the field. Each assembly typically comprises dividers covering a pair of stalkrolls, gathering chains, stripper plates and a gear drive system. As the corn header is moved forwardly, the corn plants in each row enter the forwardly extending channels. Generally the corn header has a stripper plate with a slot which is wide enough to receive a corn stalk, but not wide enough for the stalk and an ear of corn to pass through. As the stripper plate moves forwardly, it exerts a forward and upward force on the ear.

Below the stripper plate in each corn header unit are a pair of stalkrolls, the axes of which are parallel to the stripper plate slot and are located on each side of said stripper plate slot. These rolls rotate in opposite directions to one another engaging the stalk below the stripper plate. The directions of rotation are such as to exert a downward and rearward force on the stalk relative to the stripper plate. The generally opposite forces exerted by the rolls and the plate on the stalk and the ears snap off the ears from the stalk. The ears and any trash are transported into the harvester or combine for further processing while the stalk generally remains rooted in the ground.

Stalkrolls generally have conical front ends (sometimes referred to as front augers) to provide a space for entry of the stalk and generally cylindrical rear ends (sometimes referred to as fabricated stalkrolls) which engage the stalk. The front end may be provided with helical flutes wound in opposite directions to drive the stalk rearwardly toward the stripper plate. Usually the fabricated stalkrolls have circumferentially spaced, axially extending and radially projecting flutes which engage the stalk. The flutes on each roll are arranged in a manner so that the flutes intermesh in the manner of gears.

In conventional farming, the soil is tilled after the crop is harvested in the fall in order to break up the roots and stalks left in the field and once more before planting the next crop to provide loose soil for receiving the seed. Low till techniques seek to minimise the number of tillings in order to save on fuel costs for machinery, extend the life-time of machines, enable larger acreage to be tilled and save on labour costs by allowing for a smaller work force. Less tillage minimises soil erosion and pollution of water in wells, aquifers and waterways. Less tillage minimises the runoff of plant nutrients, unused commercial fertilisers, and herbicide residues. Less tillage and no till techniques, in particular, are believed to improve moisture retention in the soil improving future crops because the residue left on the ground with these techniques acts as mulch. The composting effect of the residue after it has decomposed may in the long-term reduce the need for commercial fertiliser. Low till and no till techniques are encouraged or required on some acreage by laws and regulations.

Depending on the tilling technique desired, it may be preferable to use a different stalkroll. For example, the flutes on a low till or no till acreage may be sharper than the flutes used on a stalkroll on conventional acreage. Sharper flutes or knives on the stalkroll will cut the stalk leaving this residue in a better condition to decompose. However, converting the flutes or knives on existing stalkrolls is a difficult and time-consuming task. Depending on the design, anywhere from 6 to 28 bolts per pair of stalkrolls must be removed. Furthermore stalkrolls may be clamped to the drive shaft by rust which holds the stalkroll onto the shaft, requiring substantial force to remove the roll. Many stalkrolls are a single cast design wherein the fabricated stalkroll and the front auger are a single unit. However, the flutes on the fabricated stalkroll are the portion which wears down the quickest. Hence, a perfectly good front auger is disposed of while replacing a worn fabricated stalkroll flute or knife.

The prior art illustrates these and other deficiencies. Originally, the stalkrolls required a bearing support between the front auger and fabricated stalkroll as illustrated in US-A-4,219,919. However, the bearings were prone to damage and failure if dirt enters the bearings. Furthermore, leaves and husks would tend to get caught and damage the bearing and bearing support elements. Bearing failure would ultimately result in the entire stalkroll failing. Another early stalkroll design is shown by US-A- 3,982,385. In this design, flutes are bolted directly to the drive shaft. This approach required a large number of bolts making replacement of the knives or flutes time consuming. Recently, the industry has started to use a cantilevered stalkroll and driving mechanism. The conventional stalkroll design in a cantilevered stalkroll system involves clamping two semi-circular halves horizontally around a centrally located drive shaft. US-A-5,404,699 and US-A-5,040,361 disclose such an approach.

Another difficulty with replacing any stalkroll is the occurrence of rust between the fabricated stalkroll and the drive shaft. Moisture frequently builds up between the stalkroll and drive shaft causing rust, further causing the stalkroll to adhere to the shaft. This adherence to the drive shaft makes removal of the stalkroll even more difficult. US-A-5,040,361 has attempted to overcome this problem by a threaded socket at the pinnacle of the front auger for the insertion of a removal device for forcing the shaft from the stalkroll.

A further difficulty with all stalkrolls involves the maintenance of proper timing between a pair of stalkrolls.

If the fabricated stalkrolls become misaligned, the flutes on the opposing stalkroll will improperly cut the stalk. In certain designs, a misalignment will result in catastrophic damage to the stalkroll. US-A-3,982,385 and US-A-5,404,699 require perfect alignment in order to be effective in cutting stalks.

Consequently, the need exists for a stalkroll which is easily removed from the drive shaft, which requires fewer attachment devices and for which the flutes can be easily replaced depending on the desired tillage conditions or wear of the flutes. It would be desirable to have a stalkroll for which alignment between a pair of stalkrolls is simple.

According to the invention a row unit for a corn header suitable for use on a corn harvester is provided, said unit comprising at least one modular stalkroll comprising:
a drive shaft linked to a drive means;
a fabricated stalkroll which is mounted around said drive shaft; and
a front auger which is inserted into said fabricated stalkroll;
characterized in that said modular stalkroll further comprises:
a retaining bolt which is inserted longitudinally into said drive shaft, whereby the fabricated stalkroll and front auger are clamped onto the drive shaft.

The fabricated stalkroll and the front auger may be clamped onto the drive shaft by a single retaining bolt, allowing for the simplified replacement of the fabricated stalkroll. Such design allows for an easy to substitute fabricated stalkroll on a drive shaft in accordance to the desired tillage.

Advantageously, the fabricated stalkroll may have a rear hub having a tapered region in contact with a tapered region of the drive shaft. The tapered regions may have an angle in the rage of 5 to 15 degrees. The fabricated stalkroll further may have front hub comprising a drive shaft receptacle for receiving therein the drive shaft. Such mounting means minimize the effect of rust adherence between the fabricated stalkroll and the drive shaft.

The drive shaft may have a milled region and the front hub may have a receptacle for receiving therein the milled region of the drive shaft, thereby transmitting the rotation of the drive shaft upon the stalkroll. The row unit further may comprise a further modular stalkroll of similar composition, having a drive shaft with a milled region which is 90 degrees from the other shaft, whereby the stalkroll is aligned easily and properly to the opposing stalkroll.

A cantilevered mounting of the modular stalkroll facilitates easy replacement of the fabricated stalkrolls.

A conventional gear pull system may be used to remove a rust adhered stalkroll.

An embodiment of the present invention will now be described in greater detail, by way of example, with reference to the accompanying drawings, in which:
Figure 1 is a general view of a combine harvester combine with a corn header containing a stalkroll according to the present invention;
Figure 2 is an exploded view of the stalkroll and drive shaft of the corn header of Figure 1;
Figure 3 is a cutaway view of the assembled stalkroll;

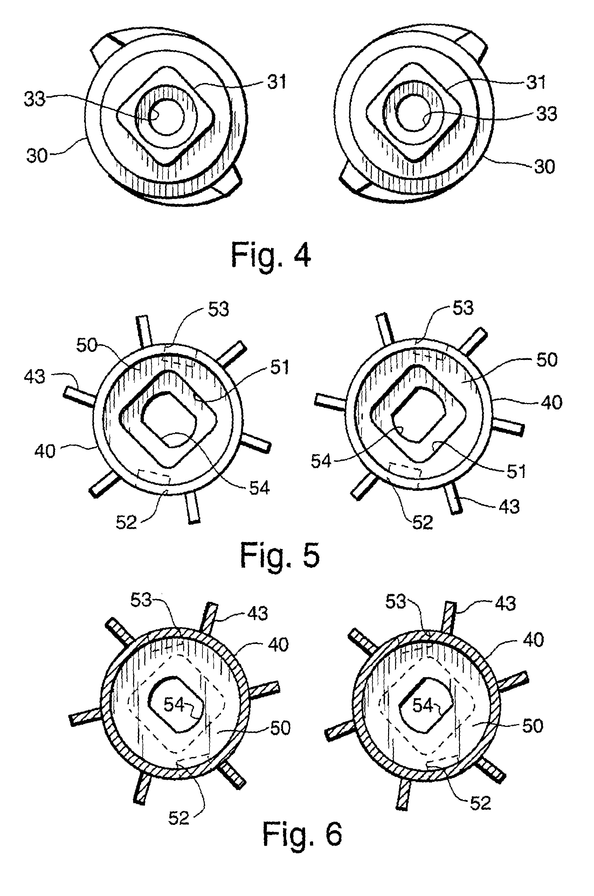

Figure 4 is an enlarged sectional view taken along line 4-4 of Fig 2 showing the male receptacle;
Figure 5 is an enlarged sectional view taken along line 5-5 of Fig. 2 showing the female receptacle on the front hub;
Figure 6 is an enlarged sectional view taken along line 6-6 of Fig. 2 showing the drive shaft receptacle of the front hub;
Figure 7 is an enlarged sectional view taken along line 7-7 of Fig. 2 showing an alternative fluting embodiment and the drive shaft receptacle of the rear hub; and
Figure 8 is an enlarged sectional view taken along line 8-8 of Fig. 2 showing the drive shaft.

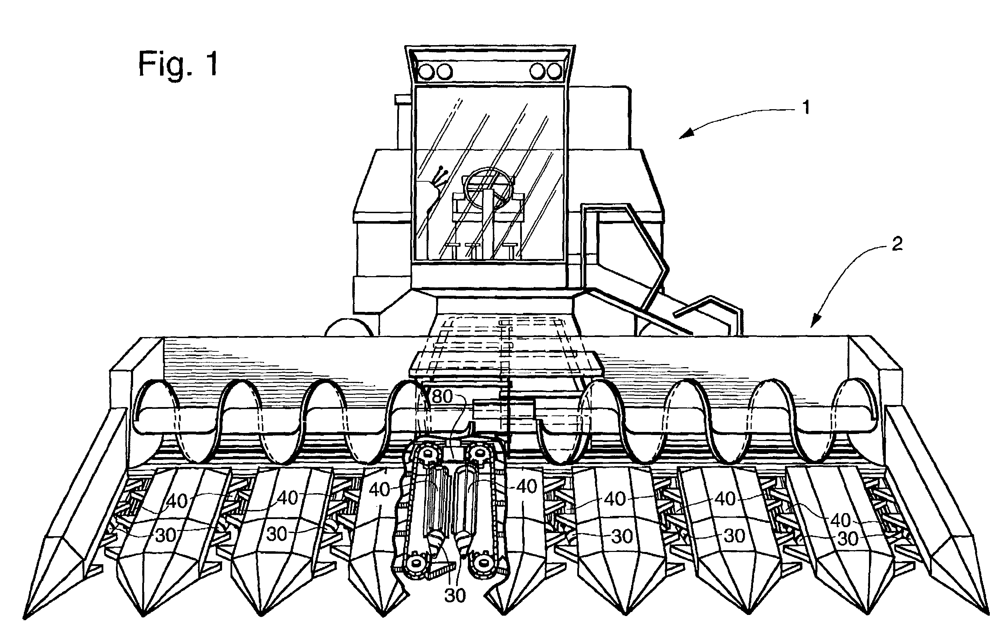

Referring to the drawings, it is possible to observe the major elements and general operation of the present invention. Figure 1 illustrates a conventional combine 1.

Typically, there is a corn header 2 attached to the combine 1 by the feeder house or elevator (shown in phantom lines). The row dividers are introduced between rows of corn and the corn stalks are drawn rearward by a front auger 30 and then cut by the stalkroll 40. The gathering chains feed the ear of corn backwards to a transverse auger. This auger moves the corn towards the feeder house. The ears of corn are moved through the feeder house into a threshing system located in the combine 1. This system then separates the corn kernels from the ear. The separated kernels of corn are conveyed into a grain tank located at the top of the combine for storage therein. The kernels are discharged later. The chaff or trash is discharged from the rear of the combine 1. An operator drives the combine from a glass cab with a chair and steering column. From the cab, the operator can observe most of the operation and functions of the corn header 2 and the combine 1. The modular stalkroll according to the present invention is located on the front of the corn header 2. The stalkroll comprises a drive shaft 70, a fabricated stalkroll 40 and a front auger 30. These elements are clamped together to the drive shaft by a retaining bolt 20. Typically stalkrolls operate in pairs and each stalkroll counter-rotates in an inward and downward fashion relative to the stalkroll axes. A stalk is drawn rearwardly by the front auger 30 toward the fabricated stalkrolls 40, which subsequently force the stalk downward and cut the same.

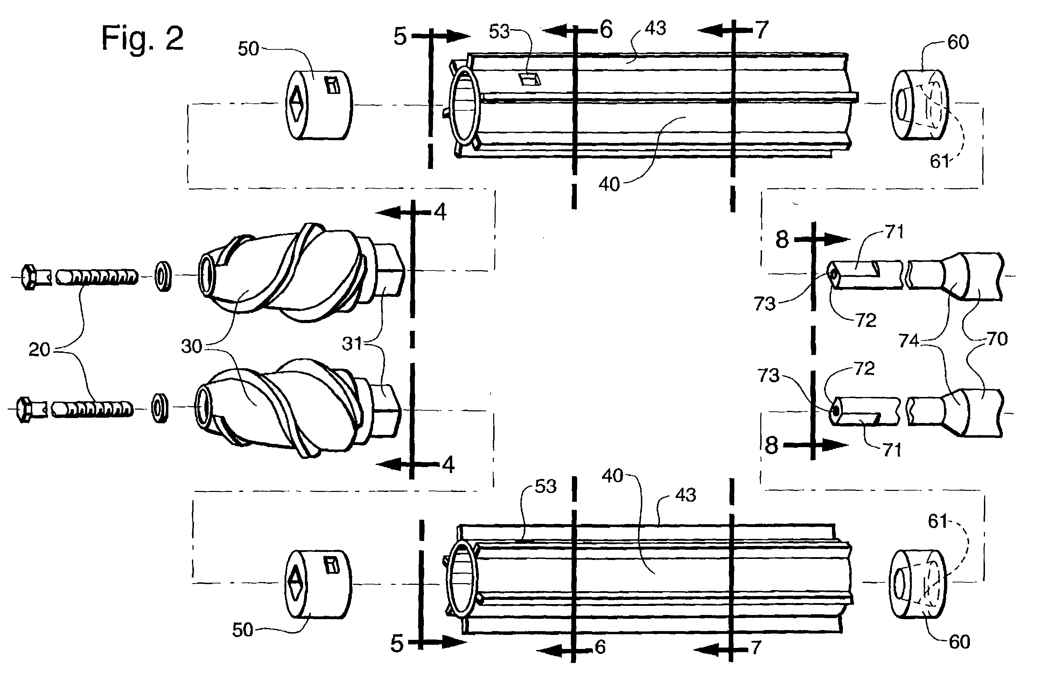

The drive shaft 70 is driven by a conventional drive means, such as a cantilevered gear and drive system disclosed in US-A-4,222,218. The drive shaft 70 has several modifications which differentiate it from a conventional drive shaft. Each drive shaft 70 has a first tapered region 74, a first milled area 71, a second milled area 72 and a bolt receptacle 73 (Figure 2). Each milled area 71 and 72 is a portion of the shaft which has been milled so as to remove a portion of the drive shaft curvature. In the preferred embodiment, the milled areas are on opposing sides of the drive shaft 70. The bolt receptacle 73 is for receiving a threaded bolt 20, which will be discussed in detail below.

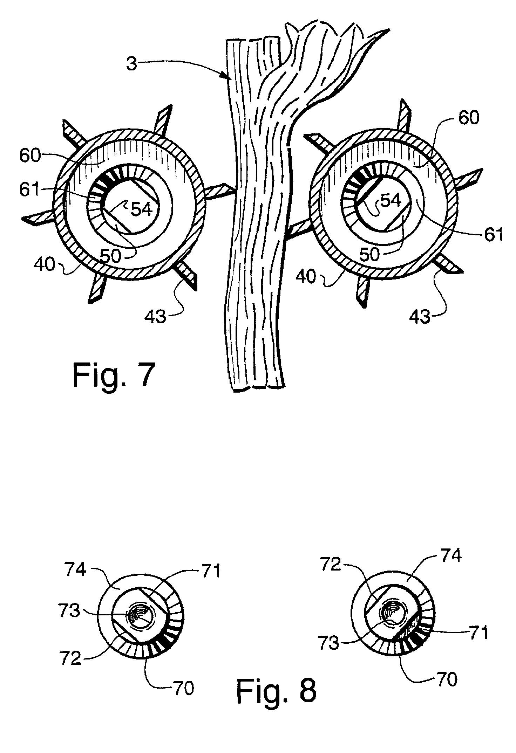

The cylindrical stalkroll 40 has a plurality of flutes 43 spaced radially around its exterior circumference. Depending on the quality of cut required, the edge of the flutes can be blunt or sharp. The interior of the stalkroll is hollow and contains a front hub 50 and a rear hub 60. These hubs have been affixed to the inner circumference of the fabricated stalkroll 40. The flutes 43 shown are standard roll flutes (which are flat and blunt), however knifes instead of flutes with a sharper cutting edge may be used depending on the type of tillage desired. If different flutes or knives are desired, the fabricated stalkroll 40 is removed and another fabricated stalkroll with the desired knives or flutes is installed. Likewise, when a flute or knife becomes damaged or worn, the fabricated stalkroll can be replaced. A variety of knives can be placed on the fabricated stalkroll. Because the fabricated stalkroll is easy to remove alternative knife designs can be experimented with. Figure 7 illustrates a fabricated stalkroll with knife shape flutes 43 instead of blunt flutes. A stalk 3 is guided between the stalkrolls for cutting. Except for the different flute style (knife instead of blunt), the stalkroll 40 is identical.

As illustrated by Figure 2, the rear hub 60 is cylindrical and has a tapering aperture in its centre. The hub 60 is affixed to the interior of the fabricated stalkroll 40. In the preferred embodiment the hub is affixed near the centre of the fabricated stalkroll. This second tapered region 61 has a slope so as to match the tapering of the first tapered region 74 located on the drive shaft 70. The slope of the taper ranges from 5 to 15 degrees. The taper of first and second tapered regions 74 and 61 is designed to allow the fabricated stalkroll and drive shaft to be clamped in a vertical manner. This is contrasted with the prior art where the stalkrolls were affixed in a horizontal manner. The slight tapering allows for easier removal if moisture enters the fabricated stalkroll and rust causes adherence between the drive shaft 70 and the rear hub 60.

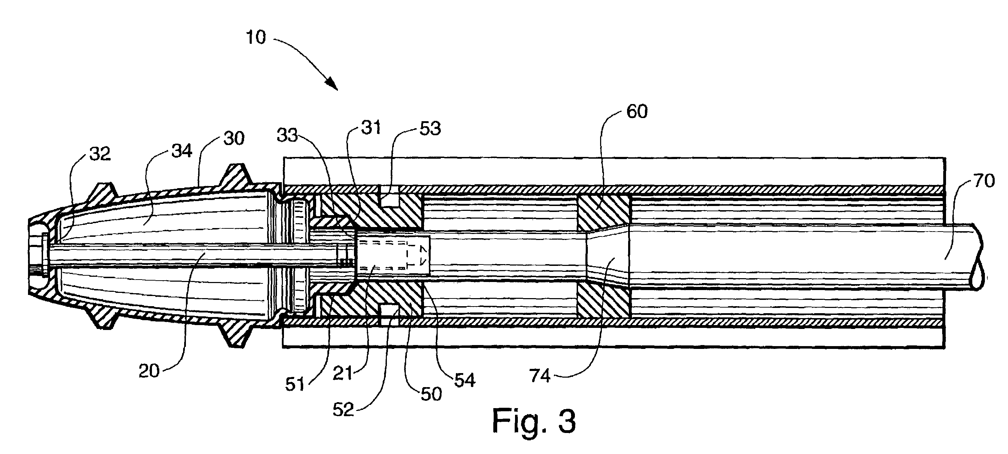

The front hub 50 is designed to receive the front auger 30 and milled regions 71 and 72 of the drive shaft 70. Also the front hub 50 is affixed to the interior of the fabricated stalkroll 40. In the preferred embodiment the front hub 50 is affixed on the end of the fabricated stalkroll farthest from the drive means 80. The front hub 50 also has an aperture. Near the surface of the hub facing the drive means 80, the aperture is designed to receive the milled areas 71 and 72 (Figure 3). This drive shaft receptacle 54 has an approximately rectangular shape in the preferred embodiment. However, any receptacle which can tightly mesh with milled areas of the drive shaft is acceptable. Near the surface of the hub facing the front auger 30, the aperture has a different shape which is designed to receive a male receptacle 31 of the front auger. In the preferred embodiment, the female receptacle 51 in hub 50 is rectangular; however again, any shape which can tightly mesh with the male receptacle 31 of the front auger 30 is acceptable. If desired, gear pulls 52 and 53 can be provided in the front hub 50. A pair of gear pull apertures on the surface of the fabricated roll 40 allows the use of a conventional gear pulling mechanism to assist in removing the fabricated stalkroll 40 from the drive shaft 70 in the event of rust adherence.

As previously mentioned, the front auger 30 has a rectangularly shaped male receptacle 31. As with conventional front augers, there is helical fluting so as to assist the stalk in moving rearwardly inbetween the fabricated stalkrolls. The core of the front auger is hollow (also referred to as a void 34). Two apertures 32 and 33 are provided in the body of the auger 30 such that a retaining bolt 20 can be inserted through the first aperture 32, through the void 34 and into the second aperture 33. The retaining bolt 20 continues through the female receptacle 51 of the front hub 50. The threaded portion 21 of the retaining bolt is inserted into the drive shaft receptacle 54 and into the drive shaft 70. The first aperture 32 is at the pinnacle of the auger 30 and the second aperture 33 is located in the male receptacle 31. The threaded portion 21 of the retaining bolt 20 is received into the bolt receptacle 73. The preferred embodiment uses a retaining bolt, however a pin with a retaining means located in the drive shaft could also suffice.

The assembly of the stalkroll 10 is accomplished by sliding the milled areas 71 and 72 of the drive shaft 70 through the rear hub 60 and into the drive shaft receptacle 54 of the front hub 50. The male receptacle 31 of the front auger 30 is positioned into the female receptacle 51 of the front hub 50. The retaining bolt 20 is inserted through the front auger 30, through the male and female receptacle 31 and 51 and in the bolt receptacle 73. As the bolt is tightened, the entire assembly 10 is wedged onto the drive shaft 70 because of the tapered region 74.

In order to maintain the correct spacing between a pair of opposing fabricated stalkrolls, the milled regions 71 and 72 of the one drive shaft 70 are oriented 90 degrees from the milled region of the opposing stalkroll drive shaft 70 (Figure 8). Because the drive shaft receptacle 54 is rectangular, the fabricated stalkroll can only be inserted with correct orientation. The opposing stalkroll will be inserted at an orientation 90 degrees different. This ensures the proper alignment of a pair fabricated stalkrolls so as to avoid stalkroll timing problems.

It will be obvious to those skilled in the art that various changes may be made without departing from the scope of the invention and the invention is not to be considered limited to what is illustrated in the drawings and described in the specification.

## Claims

1. A row unit for a corn header suitable for use on a corn harvester, said unit comprising at least one modular stalkroll (10) comprising:
a drive shaft (70) linked to a drive means;
a fabricated stalkroll (40) which is mounted around said drive shaft (70); and
a front auger (30) which is inserted into said fabricated stalkroll (40);
**characterized in that** said modular stalkroll (10) further comprises:
a retaining bolt (20) which is inserted longitudinally into said drive shaft (70), whereby the fabricated stalkroll (40) and front auger (30) are clamped onto the drive shaft (70).

2. A row unit according to claim 1, **characterized in that** said fabricated stalkroll (40) and said front auger (30) are clamped onto the drive shaft (70) by a single retaining bolt (20).

3. A row unit according to claim 1 or 2,
**characterized in that**:
said drive shaft (70) has a first tapered region (74);
said fabricated stalkroll (40) has a rear hub (60) affixed thereto, said rear hub (60) having a second tapered region (61) in contact with said first tapered region (74).

4. A row unit according to claim 3, **characterized in that** said first tapered region (74) has an angle in the range of 5 to 15 degrees and said second tapered region (61) matches the angle of the first tapered region (74).

5. A row unit according to any of the preceding claims, **characterized in that**:
said drive shaft (70) has a milled region (71, 72); and
said fabricated stalkroll (40) has a front hub (50) affixed thereto, said front hub (50) having a drive shaft receptacle (54) for receiving therein said milled region (71, 72) of the drive shaft (70).

6. A row unit according to claim 5, **characterized in that** the milled region (71, 72) comprises a first milled surface (71) and a second milled surface (72), opposite to said first milled surface (71).

7. A row unit according to claim 5 or 6, **characterized in that** the row unit comprises a further modular stalkroll (10), comprising a further drive shaft (70) having a milled region (71, 72) 90 degrees from the other drive shaft (70), whereby the further stalkroll (10) is aligned properly to the other stalkroll (10).

8. A row unit according to any of the claims 5 to 7, **characterized in that**:
said front hub (50) has a female receptacle (51); and
said front auger (30) has a male receptacle (31) for insertion into said female receptacle (51).

9. A row unit according to claim 8, **characterized in that** the male receptacle (31) and the female receptacle (51) are rectangularly shaped.

10. A row unit according to claim 8 or 9, **characterized in that**:
the front auger (30) has a void (34) therein and a pinnacle with a first aperture (32), connected to the void (34);
said male receptacle (31) has a second aperture (33) therein, connected to the void (34) and aligned with the first aperture (32), whereby the retaining bolt (20) passes through the first aperture (32), into the void (34) then into the second aperture (33).

11. A row unit according to any of the claims 8 to 10, **characterized in that** said front hub (50) has an aperture therein, connected to the female receptacle (51) for enabling the retaining bolt (20) to reach the drive shaft (70).

12. A row unit according to any of the preceding claims, **characterized in that** said fabricated stalkroll (40) has a plurality of flutes (43) affixed thereon, each flute (43) being selected from a group comprising a flat, blunt flute and a sharp knife.

13. A row unit according to claim 12, **characterized in that** the row unit comprises a further modular stalkroll (10) having a plurality of flutes (43), meshing like gears with the flutes (43) of the other stalkroll (10).

14. A row unit according to any of the preceding claims, **characterized in that** the fabricated stalkroll (40) further comprises a gear pull (52, 53).

15. A row unit according to any of the preceding claims, **characterized in that** said modular stalkroll (10) is cantilevered.

16. A row unit according to any of the preceding claims, **characterized in that**:
said drive shaft (70) has a bolt receptacle (73); and
said retaining bolt (20) has a threaded portion (21) which is inserted rotationally and longitudinally into said bolt receptacle (73).

## Patentansprüche

1. Reiheneinheit für ein Mais-Vorsatzgerät, das zur Verwendung auf einer Mais-Erntemaschine geeignet ist, wobei die Einheit zumindest eine modulare Pflückwalze (10) aufweist, mit:
einer Antriebswelle (70), die mit einer Antriebseinrichtung verbunden ist,
einer strukturierten Pflückwalze (40), die um die Antriebswelle (70) herum befestigt ist, und
einer vorderen Schnecke (30), die in die strukturierte Pflückwalze (40) eingesetzt ist,
**dadurch gekennzeichnet, dass** die modulare Pflückwalze (10) weiterhin folgendes umfasst:
eine Halteschraube (20), die in Längsrichtung in die Antriebswelle (70) eingesetzt ist, wodurch die strukturierte Pflückwalze (40) und die vordere Schnecke (30) auf die Antriebswelle (70) festgeklemmt werden.

2. Reiheneinheit nach Anspruch 1,
**dadurch gekennzeichnet, dass** die strukturierte Pflückwalze (40) und die vordere Schnecke (30) auf der Antriebswelle (70) durch eine einzige Halteschraube (20) festgeklemmt werden.

3. Reiheneinheit nach Anspruch 1 oder 2,
**dadurch gekennzeichnet, dass**:
die Antriebswelle (70) einen ersten sich verjüngenden Bereich (74) aufweist,
die struktruierte Pflückwalze (40) eine daran befestigte hintere Nabe (60) aufweist, wobei die hintere Nabe (60) einen zweiten sich verjüngenden Bereich (61) in Kontakt mit dem ersten sich verjüngenden Bereich (74) aufweist.

4. Reiheneinheit nach Anspruch 3,
**dadurch gekennzeichnet, dass** der erste sich verjüngende Bereich (74) einen Winkel im Bereich von 5 bis 15 Grad aufweist, und dass der zweite sich verjüngende Bereich (61) an den Winkel des ersten verjüngenden Bereiches (74) angepasst ist.

5. Reiheneinheit nach einem der vorhergehenden Ansprüche,
**dadurch gekennzeichnet, dass**:
die Antriebswelle (70) einen abgefrästen Bereich (71, 72) aufweist, und
die strukturierte Pflückwalze (40) eine daran befestigte vordere Nabe (50) aufweist, wobei die vordere Nabe (50) eine Antriebswellen-Aufnahme (54) zur Aufnahme des abgefrästen Bereiches (71, 72) der Antriebswelle (70) aufweist.

6. Reiheneinheit nach Anspruch 5,
**dadurch gekennzeichnet, dass** der abgefräste Bereich (71, 72) eine erste abgefräste Oberfläche (71) und eine zweite abgefräste Oberfläche (72) gegenüberliegend zu der ersten abgefrästen Oberfläche (71) aufweist.

7. Reiheneinheit nach Anspruch 5 oder 6,
**dadurch gekennzeichnet, dass** die Reiheneinheit eine weitere modulare Pflückwalze (10) umfasst, die eine weitere Antriebswelle (70) mit einem abgefrästen Bereich (71, 72) aufweist, der um 90 Grad gegenüber der anderen Antriebswelle (70) versetzt ist, sodass die weitere Pflückwalze (10) in geeigneter Weise gegenüber der anderen Pflückwalze (10) ausgerichtet ist.

8. Reiheneinheit nach einem der Ansprüche 5 bis 7,
**dadurch gekennzeichnet, dass**:
die vordere Nabe (50) eine Aufnahmebuchse (51) aufweist, und
die vordere Schnecke (30) einen Aufnahmezapfen (31) zum Einsetzen in die Aufnahmebuchse (51) aufweist.

9. Reiheneinheit nach Anspruch 8,
**dadurch gekennzeichnet, dass** der Aufnahmezapfen (31) und die Aufnahmebuchse (51) eine rechtwinklige Form aufweisen.

10. Reiheneinheit nach Anspruch 8 oder 9,
**dadurch gekennzeichnet, dass**:
die vordere Schnecke (30) einen darin ausgebildeten Hohlraum (34) und eine Spitze mit einer ersten Öffnung (32) aufweist, die mit dem Hohlraum (34) verbunden ist,
der Aufnahmezapfen (31) eine zweite darin ausgebildete Öffnung (33) aufweist, die mit dem Hohlraum (34) verbunden und mit der ersten Öffnung (32) ausgerichtet ist, sodass die Halteschraube (20) durch die erste Öffnung (22) in den Hohlraum (34) und dann in die zweite Öffnung (33) verläuft.

11. Reiheneinheit nach einem der Ansprüche 8 bis 10,
**dadurch gekennzeichnet, dass** die vordere Nabe (50) eine darin ausgebildete Öffnung aufweist, die mit der Aufnahmebuchse (51) verbunden ist, um es der Halteschraube (20) zu ermöglichen, die Antriebswelle (70) zu erreichen.

12. Reiheneinheit nach einem der vorhergehenden Ansprüche,
**dadurch gekennzeichnet, dass** die strukturierte Pflückwalze (40) eine Vielzahl von daran befestigten Rippen (43) aufweist, wobei jede Rippe (43) aus einer Gruppe ausgewählt ist, die eine flache stumpfe Rippe und ein scharfes Messer umfasst.

13. Reiheneinheit nach Anspruch 12,
**dadurch gekennzeichnet, dass** die Reiheneinheit eine weitere modulare Pflückwalze (10) mit einer Vielzahl von Rippen (43) aufweist, die nach Art von Zahnrädern mit den Rippen (43) der anderen Pflückwalze (10) kämmen.

14. Reiheneinheit nach einem der vorhergehenden Ansprüche,
**dadurch gekennzeichnet, dass** die strukturierte Pflückwalze (40) weiterhin Zahnradabziehelemente (52, 53) aufweist.

15. Reiheneinheit nach einem der vorhergehenden Ansprüche,
**dadurch gekennzeichnet, dass** die modulare Pflückwalze (10) freitragend ist.

16. Reiheneinheit nach einem der vorhergehenden Ansprüche,
**dadurch gekennzeichnet, dass**:
die Antriebswelle (70) eine Schraubenaufnahme (73) aufweist, und
die Halteschraube (20) einen Gewindeabschnitt (21) aufweist, der in Drehrichtung und in Längsrichtung in die Schraubenaufnahme (73) eingesetzt ist.

## Revendications

1. Unité de rang pour un récolteur à maïs pouvant être utilisé sur une moissonneuse de maïs, ladite unité possédant au moins un rouleau de tiges modulaire (10) comprenant:
un arbre d'entraînement (70) relié à un moyen d'entraînement ;
un rouleau de tiges (40) conformé monté autour dudit arbre d'entraînement (70) ; et
une vis frontale (30) insérée dans ledit rouleau de tiges conformé (40);
**caractérisée en ce que** ledit rouleau de tiges modulaire (10) comprend en outre:
un boulon de retenue (20) inséré longitudinalement dans ledit arbre d'entraînement (70), de sorte que le rouleau de tiges conformé (40) et la vis frontale (30) sont serrés sur l'arbre d'entraînement (70).

2. Unité de rang selon la revendication 1, **caractérisée en ce que** ledit rouleau de tiges conformé (40) et ladite vis frontale (30) sont serrés sur l'arbre d'entraînement (70) par un boulon de retenue (20) unique.

3. Unité de rang selon la revendication 1 ou 2,
**caractérisée en ce que**:
ledit arbre d'entraînement (70) possède une première zone conique (74) ;
ledit rouleau de tiges conformé (40) possède un tourillon arrière (60) fixé à ce dernier, ledit tourillon arrière (60) possédant une seconde zone conique (61) en contact avec ladite première zone conique (74).

4. Unité de rang selon la revendication 3, **caractérisée en ce que** ladite première zone conique (74) possède un angle compris entre 5 et 15 degrés et que ladite seconde zone conique (61) correspond à l'angle de la première zone conique (74).

5. Unité de rang selon l'une quelconque des revendications précédentes, **caractérisée en ce que**:
ledit arbre d'entraînement (70) possède une zone fraisée (71, 72) ; et
ledit rouleau de tiges conformé (40) possède un tourillon avant (50) fixé à ce dernier, ledit tourillon avant (50) possédant un logement (54) d'arbre d'entraînement destiné à y recevoir ladite zone fraisée (71, 72) de l'arbre d'entraînement (70).

6. Unité de rang selon la revendication 5, **caractérisée en ce que** la zone fraisée (71, 72) comprend une première surface fraisée (71) et une seconde surface fraisée (72) opposée à ladite première surface fraisée (71).

7. Unité de rang selon la revendication 5 ou 6, **caractérisée en ce que** l'unité de rang comprend un rouleau de tiges modulaire supplémentaire (10), comprenant un arbre d'entraînement supplémentaire (70) possédant une zone fraisée (71, 72) disposée à 90 degrés par rapport à l'autre arbre d'entraînement (70) de sorte que le rouleau de tiges supplémentaire (10) soit aligné correctement par rapport à l'autre rouleau de tiges (10).

8. Unité de rang selon l'une quelconque des revendications 5 à 7, **caractérisée en ce que**:
ledit tourillon avant (50) possède un logement femelle (51) ; et
ladite vis frontale (30) possède un logement mâle (31) destiné à s'insérer dans ledit logement femelle (51).

9. Unité de rang selon la revendication 8, **caractérisée en ce que** les logements mâle (31) et femelle (51) sont de forme rectangulaire.

10. Unité de rang selon la revendication 8 ou 9, **caractérisée en ce que**:
la vis frontale (30) possède un évidement (34) en son sein et une pointe munie d'une première ouverture (32) en connexion avec l'évidement (34) ;
ledit logement mâle (31) possède une seconde ouverture (33) en son sein, en connexion avec l'évidement (34) et en alignement avec la première ouverture (32) de sorte que le boulon de retenue (20) passe au travers de la première ouverture (32), dans l'évidement (34) et ensuite dans la seconde ouverture (33).

11. Unité de rang selon l'une quelconque des revendications 8 à 10, **caractérisée en ce que** ledit tourillon avant (50) possède une ouverture en son sein, en connexion avec le logement femelle (51) afin de permettre au boulon de retenue (20) d'atteindre l'arbre d'entraînement (70).

12. Unité de rang selon l'une quelconque des revendications précédentes, **caractérisée en ce que** ledit rouleau de tiges conformé (40) possède une pluralité de cannelures (43) fixées sur lui, chaque cannelure (43) étant sélectionnée dans un groupe comprenant une cannelure plane, émoussée et un couteau acéré.

13. Unité de rang selon la revendication 12, **caractérisée en ce que** l'unité de rang comprend un rouleau de tiges modulaire supplémentaire (10) possédant une pluralité de cannelures (43) s'engrenant comme des roues dentées avec les cannelures (43) de l'autre rouleau de tiges (10).

14. Unité de rang selon l'une quelconque des revendications précédentes, **caractérisée en ce que** le rouleau de tiges conformé (40) comprend en outre une ouverture d'arrache-poulie (52, 53).

15. Unité de rang selon l'une quelconque des revendications précédentes, **caractérisée en ce que** ledit rouleau de tiges modulaire (10) est en porte-à-faux.

16. Unité de rang selon l'une quelconque des revendications précédentes, **caractérisée en ce que**:
ledit arbre d'entraînement (70) possède un logement de boulon (73) ; et
ledit boulon de retenue (20) possède une partie filetée (21) qui est insérée avec rotation et longitudinalement dans ledit logement de boulon (73).
